# EUROPÄISCHE PATENTSCHRIFT

(11) **EP 1 645 765 B1**
(45) Veröffentlichungstag und Bekanntmachung des Hinweises auf die Patenterteilung: **12.09.2018**
(21) Anmeldenummer: 04023814.9
(22) Anmeldetag: 06.10.2004
(51) Int. Cl.: F16D 13/52

(54) **Kraftübertragungsaggregat**
Power transmission assembly
Ensemble de transmission

(43) Veröffentlichungstag der Anmeldung: 12.04.2006
(73) Patentinhaber: BorgWarner, Inc., Auburn Hills, MI 48326-2872 (US)
(72) Erfinder: Heinrich, Johannes, Dr., 61381 Friedrichsdorf (DE); Hauck, Hans Jürgen, 76137 Karlsruhe (DE)
(74) Vertreter: Westphal, Mussgnug & Partner Patentanwälte mbB

(56) Entgegenhaltungen:
- WO-A1-03/102438
- DE-A1- 10 205 768

## Beschreibung

Die Erfindung betrifft ein Kraftübertragungsaggregat gemäß dem Oberbegriff des Patentanspruchs 1.

Ein gattungsgemäßes Kraftübertragungsaggregat ist beispielsweise in der EP 1 422 430 A1 oder der DE 102 05 768 A1 beschrieben. Üblicherweise werden in Lamellenkupplungen, wie zum Beispiel in einer Doppelkupplung, das Lamellenpaket und die Mitnehmerscheibe jeweils durch einen Sprengring im Lamellenträger axial festgelegt. Beim Lamellenpaket wird hierbei in der Regel noch durch eine geeignete Sprengringdicke das Lüftspiel der Lamellen mit eingestellt. Auch die Mitnehmerscheibe sollte axial möglichst spielfrei festgelegt werden.

Um beim Leerlaufbetrieb des Verbrennungsmotors ein Schlagen der Mitnehmerscheibe innerhalb des möglichen Spiels in Umfangsrichtung zu vermeiden, kann die Axialfixierung der Mitnehmerscheibe axial vorgespannt sein. Dadurch wird in der Verbindung zwischen Mitnehmerscheibe und Lamellenträger ein Reibmoment erzeugt, welches ausreicht, die gegenseitigen Bewegungen zwischen Lamellenträger und Mitnehmerscheibe zu verhindern.

Bei dem bekannten Kraftübertragungsaggregat, bei dem die axiale Fixierung der Mitnehmerscheibe mit einem Sprengring erfolgt, wird eine relativ große Länge an axialem Stauraum benötigt, da aus Festigkeitsgründen zwischen der den Sprengring aufnehmenden Sicherungsringnut und dem axialen Ende des Lamellenträgers in axialer Richtung eine gewisse Materialdicke vorgesehen werden muss, um die auf die Mitnehmerscheibe in axialer Richtung wirkenden Kräfte aufnehmen zu können.

Häufig ist der axial zur Verfügung stehende Bauraum sehr begrenzt, besonders im Bereich des Lamellenträgers selbst, weil hier meistens noch ein Dämpfer bzw. ein Zweimassenschwungrad angeordnet ist.

Der Erfindung liegt daher die Aufgabe zugrunde, ein Kraftübertragungsaggregat vorzuschlagen, bei dem der axiale Bauraum reduziert ist.

Diese Aufgabe wird durch die Merkmale des Patentanspruchs 1 gelöst.

Vorteilhafte Ausgestaltungen der Erfindung sind in den Unteransprüchen angegeben.

Der Erfindung liegt der Gedanke zugrunde, die Mitnehmerscheibe ausschließlich kupplungsseitig zu befestigen, um die auf die Mitnehmerscheibe in axialer Richtung wirkenden Kräfte in den Bereich des Lamellenträgers umzuleiten, der sich axial von der Mitnehmerscheibe in Richtung Lamellen erstreckt. Da der Bereich des Lamellenträgers, der sich axial von der Mitnehmerscheibe nach außen erstreckt keine Haltefunktion mehr hat, kann dieser entsprechend verkürzt ausgebildet werden. Prinzipiell ist es aufgrund der erfindungsgemäßen Ausgestaltung des Kraftübertragungsaggregates möglich, dass der Lamellenträger in axialer Richtung lediglich bis zur Mitnehmerscheibe und nicht darüber hinaus reicht.

Die Erfindung schlägt unterschiedliche Möglichkeiten zur Ausbildung der Mittel zur axialen Fixierung der Mitnehmerscheibe an den Lamellenträger vor.

Die Mittel zur axialen Fixierung der Mitnehmerscheibe sind erfindungsgemäß derart ausgebildet, dass sie die Mitnehmerscheibe auf der den Lamellen abgewandten Seite hintergreifen, um die in diese Richtung wirkenden Axialkräfte in den Kupplungsbereich des Lamellenträgers umzuleiten. Um beim Leerlauf des Verbrennungsmotors ein Schlagen der Mitnehmerscheibe zu vermeiden, wird die Mitnehmerscheibe mit den Mitteln zur axialen Fixierung gegen den Lamellenträger vorgespannt.

Eine Möglichkeit der Kraftumlenkung besteht darin, dass die Mittel zur axialen Fixierung von der Innenseite des Lamellenträgers her an diesem befestigt sind. Dabei ist es von Vorteil, wenn die Mittel zur axialen Fixierung als geschlossenes, ringförmiges Sicherungselement ausgebildet ist, welches von der Innenseite her am Lamellenträger in axialer Richtung festgelegt ist. Das Sicherungselement weist über den Umfang verteilte, axial in Richtung Mitnehmerscheibe weisende Haltefinger auf, die durch axiale Öffnungen in der Mitnehmerscheibe geführt sind. Die freien Enden der Haltefinger sind abgewinkelt und hintergreifen die Mitnehmerscheibe, so dass sie in axialer Richtung wirkende Kräfte aufnehmen können und über die Haltefinger und das Sicherungselement in den Bereich des Lamellenträgers umleiten, der sich axial von der Mitnehmerscheibe in Richtung Lamellen erstreckt.

Üblicherweise ist zwischen den Lamellen und der Mitnehmerscheibe eine Rückenplatte zur Begrenzung der Axialbewegung der Lamellen vorgesehen. Diese ist in der Regel mittels eines Sprengrings am Lamellenträger festgelegt. Der Sprengring ist in einer umlaufenden Sicherungsringnut in den Axialstegen des Lamellenträgers gehalten. In Ausgestaltung der Erfindung ist mit Vorteil vorgesehen, dass das Sicherungselement zwischen Rückenplatte und Sprengring eingespannt ist. Zur drehfesten Fixierung des Sicherungselements an dem Lamellenträger, ist das Sicherungselement mit einer Außenverzahnung versehen, die in die Axialnuten des Lamellenträgers eingreift.

Gemäß einer Weiterbildung der Erfindung ist mit Vorteil vorgesehen, dass die abgewinkelten Enden der Haltefinger in radial verlaufenden Ausnehmungen in der Mitnehmerscheibe aufgenommen sind, um zu vermeiden, dass die abgewinkelten Enden in axialer Richtung über den Lamellenträger hinaus ragen. Hierdurch kann der axiale Bauraum zusätzlich verkürzt werden. Damit die Mitnehmerscheibe axial gegen den Lamellenträger vorgespannt ist, ist mit Vorteil vorgesehen, dass die mit den Haltefingern auf die Mitnehmerscheibe aufgebrachte Vorspannung federnd gespeichert wird.

Um eine Positionierung des Sicherungselementes in Umfangsrichtung zu ermöglichen, sind beispielsweise als Haken ausgebildete Positionierungsmittel vorgesehen, die in einer Ausnehmung in der Rückplatte eingreifen.

Gegenüber der Bauart nach der EP 1 422 430 A1 lässt sich das übertragene Drehmoment steigern, weil dort bei dreißig vorhandenen Axialstegen, nur zwanzig Axialstege zur Aufnahme des Drehmoments durch die schwalbenschwanzförmigen Zähne der Mitnehmerscheibe zur Verfügung stehen, während an zehn Axialstegen der Sprengring zur axialen Festlegung in Nuten fixiert ist. Aufgrund der erfindungsgemäßen Ausgestaltung des Kraftübertragungsaggregats kann nunmehr an jedem Axialsteg ein schwalbenschwanzförmiger Zahn der Mitnehmerscheibe angeordnet sein, weshalb sich die Drehmomentübertragbarkeit bei gleicher Anzahl von Axialstegen um 50 Prozent erhöht.

Gemäß einer weiteren Ausführungsform der Erfindung weist das ringförmige Sicherungselement eine Außenverzahnung auf, mit der es in eine, vorzugsweise in den Axialstegen des Lamellenträgers vorgesehene, Umfangsnut einbringbar ist. Dabei handelt es sich insbesondere um die Sicherungsringnut zur Aufnahme des Sprengrings zur axialen Festlegung des Lamellenpaketes. Bei der Montage wird die Außenverzahnung des Sicherungselementes in die Axialnuten des Lamellenträgers in axialer Richtung in Richtung Lamellenpaket eingeschoben und daraufhin in Umfangsrichtung verdreht, wobei die Außenverzahnung in die Umfangsnut im Lamellenträger eingreift. Wenn es sich bei dieser Umfangsnut um die Sicherungsringnut zur Halterung des Sprengrings für das Lamellenpaket handelt, müssen die Lamellen, die Rückenplatte sowie der Sprengring vor dem Eindrehen des Sicherungselementes vormontiert werden. In diesem Fall verschieben sich die Außenzähne beim Verdrehen des Sicherungselementes zwischen den Sprengring und die Nutwand.

Daraufhin wird die Mitnehmerscheibe auf die axialen Haltefinger des Sicherungselements aufgesetzt, wobei die Außenverzahnung der Mitnehmerscheibe in den Lamellenträger eingreift. Zur Durchführung der Haltefinger durch die Mitnehmerscheibe weist diese über den Umfang verteilte kleine Fenster auf. Zwischen die abgewinkelten Enden der Haltefinger und der Mitnehmerscheibe wird nun ein Vorspannring in der Art eines Bajonettverschlusses eingebracht, wobei durch Verdrehen des Vorspannrings die Mitnehmerscheibe gegen den Lamellenträger vorgespannt wird. Hierzu weist der Vorspannring über den Umfang verteilte, in Umfangsrichtung verlaufende Schlitze, zur Durchführung der Haltefinger auf, wobei entlang zumindest einer Schlitzlängsseite jedes Schlitzes eine sich in Umfangsrichtung axial verbreiterte Rampe vorgesehen ist. Für gute Kontaktbedingungen zwischen den Rampen und den abgewinkelten Enden der Haltefinger sind die abgewinkelten Enden der Haltefinger in Umfangsrichtung abgewinkelt.

Damit der Vorspannring sich unter Betriebsbedingungen nicht lockern kann, wird er an der Mitnehmerscheibe fixiert. Erfindungsgemäß weist der Vorspannring über den Umfang verteilte Zungen auf, die in Fenster der Mitnehmerscheibe eingebogen werden können. Wenn der Vorspannring auf dem Umfang eine bestimmte Anzahl von Zungen aufweist und die Mitnehmerscheibe eine ähnlich große Anzahl von Fenstern in anderer Teilung aufweist, lässt sich bei geeigneter Anordnung zueinander für feingestufte Positionen des Vorspannrings gegenüber der Mitnehmerscheibe immer mindestens eine Zunge finden, die in ein Fenster der Mitnehmerscheibe abgewinkelt werden kann - vergleichbar der üblichen Anordnung von Wellenmutternuten und zugehörigen Sicherungsblechlappen.

Auch bei dieser Ausgestaltungsform kann das maximal übertragbare Drehmoment gegenüber bekannten Vorrichtungen erhöht werden, in dem alle Zähne oder nahezu alle Zähne der Mitnehmerscheibe ein Teildrehmoment auf dem Lamellenträger übertragen.

Eine andere Möglichkeit der Kraftumlenkung besteht darin, dass die Mittel zu axialen Fixierung von der Außenseite des Lamellenträgers her an diesem befestigt sind.

Dazu ist mit Vorteil vorgesehen, dass die Mittel zu axialen Fixierung als, vorzugsweise geschlossener, abgewinkelter Ring ausgebildet sind, der einen axialen, koaxial zum Lamellenträger angeordneten, Ringabschnitt und einen radialen Ringabschnitt aufweist, wobei der Ring mit dem axialen Ringabschnitt am Lamellenträger festlegbar ist und mit dem radialen Ringabschnitt an der Rückseite der Mitnehmerscheibe anliegt. Bei entsprechender Festigkeit des den Lamellenträger teilweise umschließenden, axialen Ringabschnitts, verhindert dieser ein Aufweiten des Lamellenträgers im Betrieb. Hierdurch ist es möglich, auf die schwer montierbare Schwalbenschwanzverzahnung zwischen Lamellenträger und Mitnehmerscheibe zu verzichten.

Der axiale Ringabschnitt verfügt über über den Umfang verteilte, in axialer Richtung verlaufende und in Richtung Lamellenträger abgewinkelte, federnde Laschen zur Festlegung an den Lamellenträger, wobei die freien Enden der Laschen in Richtung radialem Ringabschnitt weisen. Bei am Lamellenträger angeschnappten Laschen steht der als Tellerfeder ausgebildete radiale Ringabschnitt unter Vorspannung und drückt die Außenverzahnung der Mitnehmerscheibe gegen einen Anschlag im Lamellenträger. Dadurch wird der Kraftfluss zwischen Mitnehmerscheibe und Außenlamellenträger herstellt, der bei entsprechender Vorspannkraft der Tellerfeder und der Laschen ein gegeneinander schlagen von Mitnehmerscheibe und Außenlamellenträger verhindert und somit Rasselgeräuschen vorbeugt. Sollten die Ölfenster im Lamellenträger durch den axialen Ringabschnitt verdeckt werden, so ist es von Vorteil, entsprechende Öffnungen im axialen Ringabschnitt selbst vorzusehen, so dass der Ölfluss durch das im Lamellenträger angeordnete Lamellenpaket nicht behindert wird.

Die erfindungsgemäße Ausgestaltung der Mittel zur axialen Fixierung des Lamellenträgers erlaubt es, dass das Drehmoment mittels einer größeren Anzahl von Zähnen der Außenverzahnung der Mitnehmerscheibe auf den Lamellenträger übertragen werden kann, als dies bei bekannten Kraftübertragungsaggregaten der Fall ist. Es ist sogar möglich, dass jeder Zahn der Außenverzahnung der Mitnehmerscheibe einen Teil des Drehmoments überträgt.

Eine vorteilhafte Möglichkeit der Ausgestaltung der Steckverzahnung besteht darin, dass die Außenverzahnung formkomplementär zu den Axialstegen und Axialnuten des Lamellenträgers ausgeformt ist. Die Anzahl der Zähne der Außenverzahnung entspricht dabei der Anzahl der Axialnuten am Lamellenträger, wobei die Zahndicke der Außenverzahnung in Umfangsrichtung der Mitnehmerscheibe derart ausgebildet ist, dass zwischen Mitnehmerscheibe und Außenlamellenträger annähernd Spielfreiheit herrscht. Um die Mitnehmerscheibe in Richtung Lamellenpaket festzusetzen, sind mehrere Axialanschläge zwischen Mitnehmerscheibe und Lamellenträger erforderlich. Hierzu sind mehrere Zähne der Außenverzahnung der Mitnehmerscheibe in radialer Richtung verlängert, wobei der radial verlängerte Abschnitt in Ausklinkungen der Axialnuten des Lamellenträgers eingreifen und axial am Lamellenträger anliegen. Da diese Ausklinkungen in der Axialnut vorgesehen ist, können diese unabhängig von der Position der in den Axialstegen befindlichen Sicherungsringnut hergestellt werden, wodurch die Mitnehmerscheibe bis annähernd an die Sicherungsringnut positioniert werden kann. Hierdurch ergibt sich ein zusätzlicher Bauraumvorteil. Ein geringer Abstand zwischen Anschlag der Mitnehmerscheibe und der Sicherungsringnut des Sprengrings für das Lamellenpaket ist aus Toleranzgründen bzw. aufgrund der Elastizität der Bauteile erforderlich, um so ein Aufliegen der Mitnehmerscheibe auf den Sicherungsring zu vermeiden.

Selbstverständlich kann die Außenverzahnung der Mitnehmerscheibe auch als Schwalbenschwanzverzahnung ausgebildet werden, die neben der Übertragung des Motormoments auch die radiale Aufweitung des Außenlamellenträgers unter Drehzahl verhindert. In diesem Fall hat der axiale Ringabschnitt keine Haltefunktion gegen radiales Aufweiten des Lamellenträgers. Jedoch kann aufgrund des Verzichts auf einen Sprengring zur axialen Festlegung der Mitnehmerscheibe das Drehmoment von sämtlichen Zähnen des Außenlamellenträgers übertragen werden. Die Anzahl der Schwalbenschwanzzähne entspricht dann der Anzahl der Axialstege des Lamellenträgers.

Gemäß einer Zeichnung, die mehrere Ausführungsbeispiele der Erfindung zeigt, wird die Erfindung näher beschrieben.

Dabei zeigen:
- Fig. 1: einen Axialschnitt durch eine erste Ausführungsform eines Kraftübertragungsaggregates,
- Fig. 2: einen Axialschnitt durch ein Kraftübertragungsaggregat nach dem Stand der Technik,
- Fig. 3: einen Ausschnitt einer zweiten Ausführung eines Kraftübertragungsaggregates in perspektivischer Darstellung
- Fig. 4: einen Ausschnitt eines Sicherungselementes gemäß Fig. 3 in perspektivischer Darstellung,
- Fig. 5: eine Draufsicht auf einen Ausschnitt einer weiteren Ausführungsform des Kraftübertragungsaggregates,

- Fig. 6: eine Schnittdarstellung durch das Kraftübertragungsaggregat entlang der in Figur 5 eingezeichneten Schnittlinie,
- Fig. 7: eine Draufsicht auf einen Ausschnitt eines Kraftübertragungsaggregats,
- Fig. 7a: eine Schnittdarstellung durch ein Kraftübertragungsaggregat entlang der in Fig. 7 eingezeichneten Schnittlinie,
- Fig. 8: eine perspektivische Explosionsdarstellung mit Lamellenträger, Mitnehmerscheibe und abgewinkeltem Fixierring,
- Fig. 9: eine vergrößerte Darstellung eines Ausschnittes aus Fig. 8,
- Fig. 10: eine perspektivische Darstellung des Lamellenträgers mit eingeführter Mitnehmerscheibe und noch nicht fixiertem Ring,
- Fig. 11: eine vergrößerte Darstellung eines Ausschnittes aus Fig. 10,
- Fig. 12: eine perspektivische Ansicht eines Lamellenträgers mit mittels eines Rings fixierter Mitnehmerscheibe,
- Fig. 13: eine vergrößerte Darstellung eines Ausschnitts von Fig. 12,
- Fig. 14: Axialschnitt durch eine Ausführungsform eines Kraftübertragungsaggregates,
- Fig. 15: Axialschnitt durch eine Ausführungsform eines Kraftübertragungsaggregates,

- Fig. 16: Axialschnitt durch eine Ausführungsform eines Kraftübertragungsaggregates,
- Fig. 17: eine Ausführungsvariante des Rings,
- Fig. 18: eine weitere Ausführungsvariante des Rings.

In den Figuren werden für gleiche Bauteile oder Bauteile mit gleicher Funktion die gleichen Bezugszeichen verwendet.

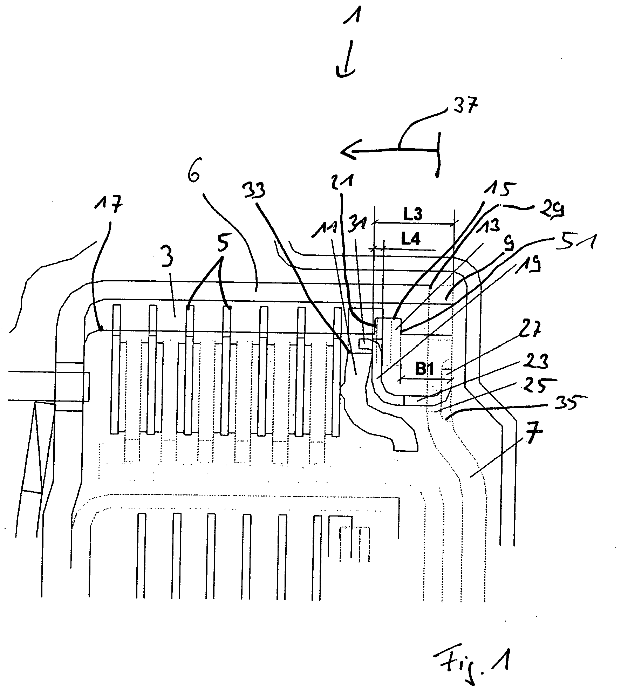

In Figur 1 ist ein Schnitt durch einen Teil eines Kraftübertragungsaggregates 1 dargestellt. Die Erfindung ist beispielhaft an einer Doppelkupplung erläutert - lässt sich aber bei allen Kraftübertragungsaggregaten mit einem Lamellenträger und einer Mitnehmerscheibe realisieren.

Die Doppelkupplung weist einen Außenlamellenträger 3 auf, der mehrere axial beabstandete Außenlamellen 5 trägt, die drehfest über eine Steckverzahnung mit dem Außenlamellenträger 3 verbunden sind. Die Außenverzahnung der Außenlamellen 5 greift in lamellenseitig über den Umfang verteilte, wechselweise angeordnete Axialstege 17 und Axialnuten 43 des Lamellenträgers 3 ein. Die Axialstege 17 und die Axialnuten 43 verlaufen entlang eines zylinderförmigen Abschnittes 6 des Lamellenträgers 3. Über eine im axialen Endbereich des Außenlamellenträgers 3 angeordnete Mitnehmerscheibe 7 ist der Außenlamellenträger 3 mit einer nicht dargestellten, angetriebenen Nabe verbunden. Zur Übertragung eines Drehmoments von der Mitnehmerscheibe 7 auf den Außenlamellenträger 3 ist zwischen Mitnehmerscheibe 7 und Außenlamellenträger 3 eine Steckverzahnung vorgesehen, die eine drehfeste Verbindung der beiden Bauteile sicherstellt. Mitnehmerscheibenseitig ist die Steckverzahnung als Außenverzahnung 9 ausgebildet, wobei die Außenverzahnung 9 mit den Axialnuten 43 und/oder den Axialstegen 17 des Außenlamellenträgers zusammenwirkt.

Um die axiale Bewegung der Außenlamellen 5 zu begrenzen, ist eine umlaufende, ringförmige Rückenplatte 11 vorgesehen. Die Rückenplatte 11 ist mittels eines Sprengrings 13 in axialer Richtung festgelegt. Der Sprengring verläuft in einer Sicherungsringnut 15, die in die Axialstege 17 des Außenlamellenträgers 3 in Umfangsrichtung eingebracht, vorzugsweise eingestanzt, ist. Durch eine geeignete Sprengringdicke wird das Lüftspiel der Lamellen 5 eingestellt. Zwischen Rückenplatte 11 und Sprengring 13 ist ein ringförmiges, geschlossenes Sicherungselement 19 eingespannt. Das Sicherungselement lässt sich auch zwischen Sprengring 13 und Nutwand 51 einspannen. Das Sicherungselement 19 weist eine Außenverzahnung 21 auf, die in die Axialnuten des Lamellenträgers 3 eingreift, um ein Verdrehen des Sicherungselementes in Umfangsrichtung zu vermeiden. Das Sicherungselement weist in axialer Richtung vorstehende, über den Umfang verteilte Haltefinger 23 auf, die durch entsprechende axiale Öffnungen 25 in der Mitnehmerscheibe 7 geführt sind. Dabei werden die freien Enden 27 erst bei der Montage abgewinkelt und hintergreifen so die Mitnehmerscheibe 7. Mittels der Haltefinger 23 ist die Mitnehmerscheibe 7 gegen den Außenlamellenträger 3 vorgespannt. Die Mitnehmerscheibe 7 liegt an Anschlägen 29 in axialer Richtung an dem Außenlamellenträger 3 an. Das Sicherungselement 19 ist als z.B. als Tellerfeder ausgebildet und speichert die durch die Haltefinger 23 auf die Mitnehmerscheibe 7 aufgebrachte Vorspannung. Es ist auch denkbar zusätzlich oder stattdessen die Haltefinger 23, z.B. als Biegefedern, federnd zu gestalten

Zur zusätzlichen Reduzierung der Baulänge sind die abgewinkelten Enden 27 der Haltefinger 23 in radial verlaufenden Ausnehmungen 35 in der Außenseite der Mitnehmerscheibe 7 aufgenommen.

Um eine exakte Positionierung des Sicherungselementes 19 in Umfangsrichtung zu gewährleisten, ist mindestens ein Haken 31 vorgesehen, der axial in eine Ausnehmung 33 in der Rückenplatte 11 eingreift.

Durch die erfindungsgemäße Ausgestaltung des Kraftübertragungsaggregates 1 greifen sämtliche von der Mitnehmerscheibe auf den Lamellenträger wirkenden Axialkräfte ausschließlich an dem Bereich 37 des Außenlamellenträgers 3 an, der sich axial von der Mitnehmerscheibe 7 in Richtung Lamellen 5 erstreckt.

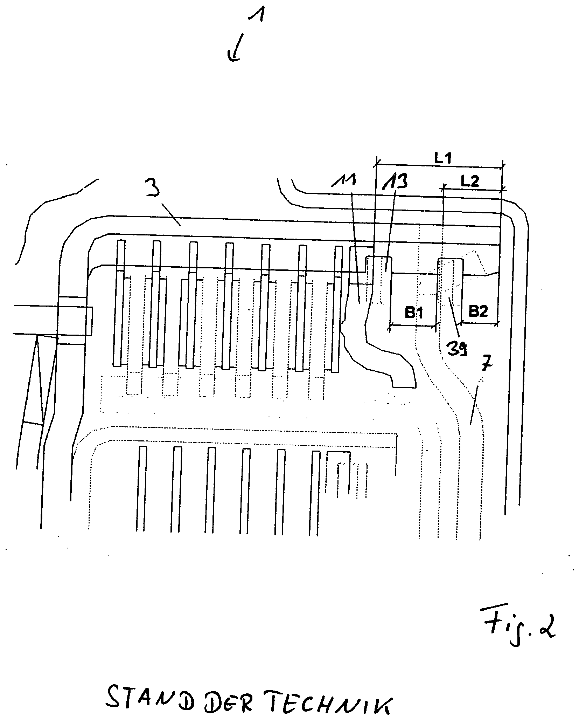

In Figur 2 ist ein Kraftübertragungsaggregat 1 gemäß dem Stand der Technik dargestellt. Dabei ist die Mitnehmerscheibe 7 in axialer Richtung mittels eines Sprengrings 39 fixiert. Die Rückenplatte 11 ist mit einem zusätzlichen Sprengring 13 festgelegt. Es ist zu erkennen, das für die axiale Fixierung mit den zwei Sprengringen 13 und 39 und die notwendigen Bundlängen B1 und B2 eine relativ große Länge L1 an axialem Bauraum benötigt wird.

Die in Figur 1 eingezeichnete axiale Baulänge L3 bei erfindungsgemäßer Ausgestaltung des Kraftübertragungsaggregates 1 ist gegenüber der Baulänge L1 um die Differenz der Länge L2 und der Länge L4 kürzer, wodurch sich in der Praxis ein axialer Bauraum in der Größenordnung von etwa 5 mm im Außenbereich des Außenlamellenträgers 3 gewinnen lässt.

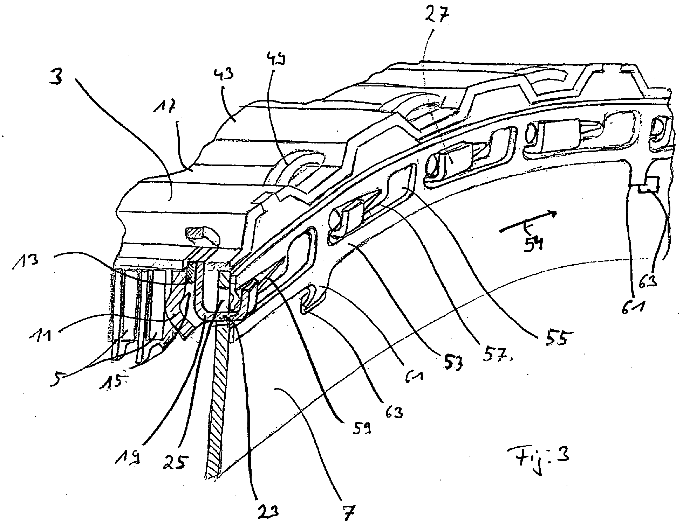

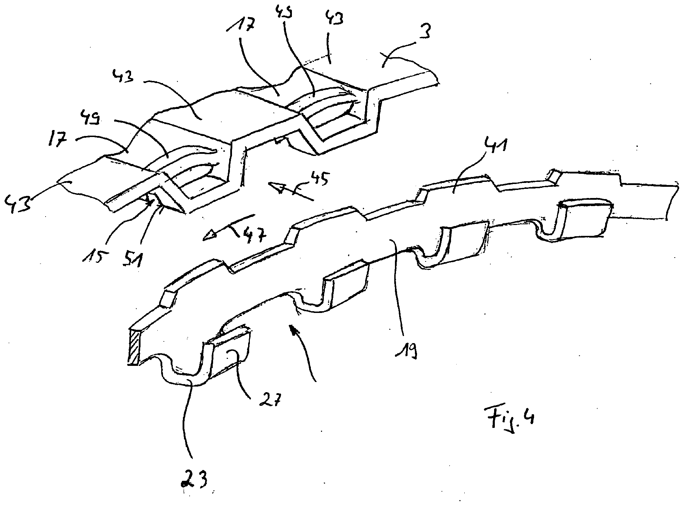

In den Figuren 3 und 4 ist ein weiteres Ausführungsbeispiel der Erfindung dargestellt. Dabei ist das geschlossene, ringförmige Sicherungselement 19 nicht zwischen Rückenplatte 11 und Springring 13 eingespannt. Im Außenbereich hat das Sicherungselement 19 eine in radiale Richtung ragende Außenverzahnung 41, die in axialer Richtung in die Axialnuten 43 des Außenlamellenträgers 3 eingesetzt werden kann. Bei der Montage wird das Sicherungselement 19 in dem Außenlamellenträger 3 fixiert, indem das Sicherungselement 19 zunächst in Richtung 45 axial in den Außenlamellenträger 3 eingeführt, wobei die Außenverzahnung 41 in die Axialnuten 43 geschoben wird. Anschließend wird das Sicherungselement 19 in Umfangsrichtung 47 verdreht, wobei die Außenverzahnung in die Sicherungsringnut 15 eingeschwenkt wird. Die Sicherungsringnut 15 ist in die Axialstege 17 des Außenlamellenträgers in Umfangsrichtung eingebracht. Bei einer spanlosen Herstellung der Nut 15 werden bei einem üblichen Fertigungsverfahren in radiale Richtung hervorstehende und in Umfangsrichtung, parallel zur Sicherungsringnut 15 verlaufende Stege 49 gebildet.

Die Sicherungsringnut 15 nimmt sowohl den Sprengring 13 für die Rückenplatte 11 als auch das Sicherungselement 19 auf. Selbstverständlich kann auch eine separate Sicherungsringnut für das Sicherungselement 19 vorgesehen werden. Hierdurch wird die Baulänge des Außenlamellenträgers jedoch zusätzlich erhöht. Bei dem dargestellten Ausführungsbeispiel sind die Lamellen 5, die Rückenplatte 11 sowie der Sprengring 13 bereits vormontiert. Die Außenverzahnung 41 schiebt sich beim Verdrehen des Sicherungselementes 19 zwischen den Sprengring 13 und die äußere Nutwand 51 der Sicherungsringnut 15.

Nach Fixierung des Sicherungselementes 19 an dem Außenlamellenträger 3 wird die Mitnehmerscheibe 7 auf die Haltefinger 23 aufgesetzt. Dabei greift die Mitnehmerscheibe 7 mit Ihrer Außenverzahnung 9 in die Axialnuten 43 des Außenlamellenträgers 3 ein. Die Haltefinger 23 werden mit ihren um etwa 90 Grad abgewinkelten Enden 27 bei diesem axialen Fügevorgang durch axiale Öffnungen 25 in der Mitnehmerscheibe 7 gesteckt.

Daraufhin wird mittels eines geschlossenen, flachen Vorspannrings 53 eine axiale Vorspannung auf die Mitnehmerscheibe aufgebracht. Der Vorspannring weist Fenster 55 auf, die ein Durchstecken der abgewinkelten Enden 27 der axialen Haltefinger 23 ermöglichen. Die Fenster 55 setzen sich in Umfangrichtung in je einen Schlitz 57 fort. Entlang einer Schlitzlängsseite jedes Schlitzes 57 ist eine sich in Umfangsrichtung axial verbreiternde Rampe 59 vorgesehen. Beim Verdrehen des Vorspannrings 53 in Umfangsrichtung 54, wirkt dieser wie ein Bajonettverschluss. Die Rampen 59 gelangen unter die abgewinkelten Enden der Haltefinger 23, wodurch eine axiale Zugkraft auf die Haltefinger 23 aufgebracht wird. Dies führt zu einer Tellerung des Sicherungselementes 19 und damit zu einer elastischen Vorspannung der Mitnehmerscheibe 7.

Für gute Kontaktbedingungen zwischen den Rampen 59 und den abgewinkelten Enden 27, können die abgewinkelten Enden 27 in Umfangsrichtung abgewinkelt werden, was in den Figuren nicht dargestellt ist.

Damit der Vorspannring 53 sich unter Betriebsbedingungen nicht wieder lockern kann, wird er in Umfangsrichtung fixiert. Hierbei werden am inneren Umfang des Vorspannrings 53 vorgesehene Zungen 61 in entsprechende Fenster 63 der Mitnehmerscheibe 7 eingebogen. Selbstverständlich sind auch andere Fixierungen denkbar, wie z.B. das Setzen von Schweißpunkten oder ein Verschrauben des Vorspannrings.

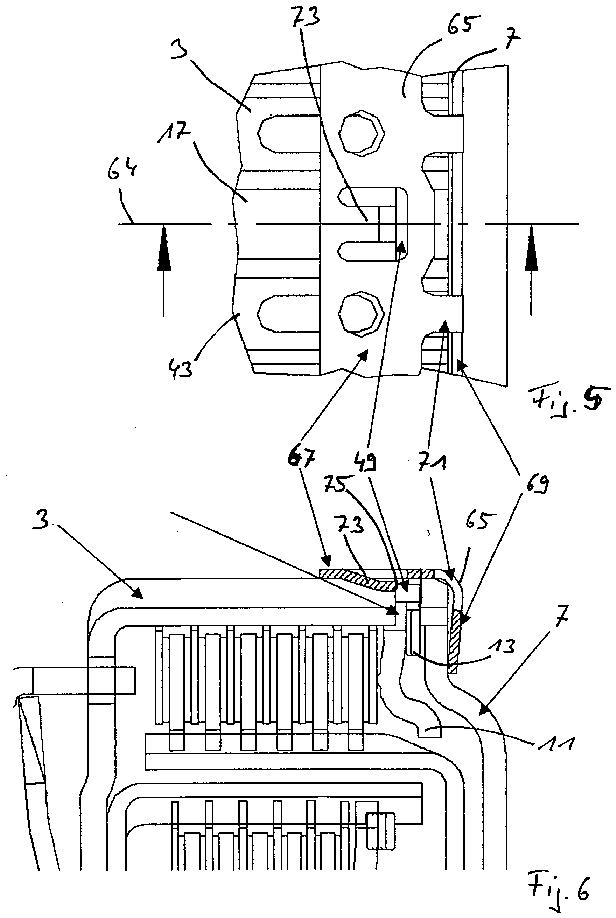

Die Figuren 5 bis 16 zeigen Ausführungsbeispiele der Erfindung, bei denen die Mittel zur axialen Fixierung von der Außenseite des Lamellenträgers 3 her an diesen festgelegt sind. Dazu ist ein geschlossener, abgewinkelter Ring 65 vorgesehen, der einen axialen, koaxial zum Lamellenträger 3 angeordneten Ringabschnitt 67 und einen dazu um etwa 90 Grad nach innen abgewinkelten, radialen Ringabschnitt 69 aufweist. Die beiden Ringabschnitte 67 und 69 sind mit über den Umfang verteilten Verbindungsstegen 71 miteinander verbunden.

Der axiale Ringabschnitt 67 verfügt über den Umfang verteilte, in axialer Richtung verlaufende und in Richtung Lamellenträger abgewinkelte, federnde Laschen 73, wobei die freien Enden 75 in Richtung radialem Ringabschnitt 69 weisen. Beim axialen Aufschieben des axialen Ringabschnittes 67 des Rings 65 auf den Außenlamellenträger 3 schnappen die nach innen durchgestellten Laschen 73 über die Stege 49 der Sicherungsringnut 13. Wie bereits erwähnt entstehen die Stege 49 bei der Herstellung der Sicherungsringnut 13 in den Axialstegen 17 im Außenlamellenträger. Der radiale Ringabschnitt 69 ist als Tellerfeder ausgebildet, die bei eingeschnappten Laschen 73 unter Vorspannung steht und somit die Außenverzahnung 9 der Mitnehmerscheibe 7 gegen Anschläge 29 im Außenlamellenträger 3 drückt. Dadurch wird Reibschluss zwischen der Mitnehmerscheibe 7 und dem Außenlamellenträger 3 hergestellt, der bei entsprechender Anpresskraft der Tellerfeder ein Gegeneinanderschlagen von Mitnehmerscheibe 7 und Außenlamellenträger 3 verhindert und somit Rasselgeräuschen vorbeugt.

Figur 6 zeigt einen Schnitt entlang der in Figur 5 eingezeichneten Schnittlinie 64, die mittig entlang eines Axialsteg 17 des Außenlamellenträgers 3 verläuft.

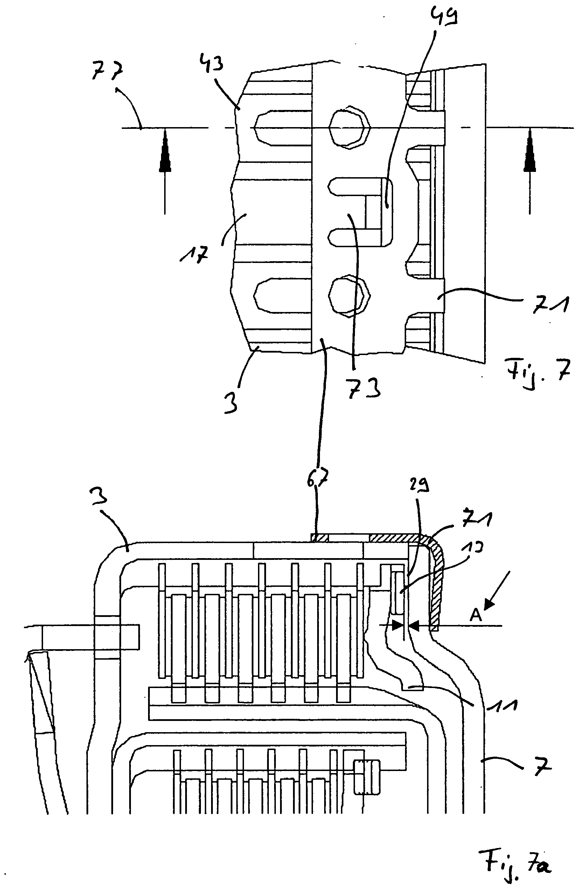

Die Figuren 7 und 7a zeigen das gleiche Ausführungsbeispiel wie die Figuren 5 und 6. In Figur 7a verläuft eine Schnittlinie 77 entlang einer Axialnut 43 des Außenlamellenträgers 3. Figur 7a zeigt den Schnitt entlang der Schnittlinie 77.

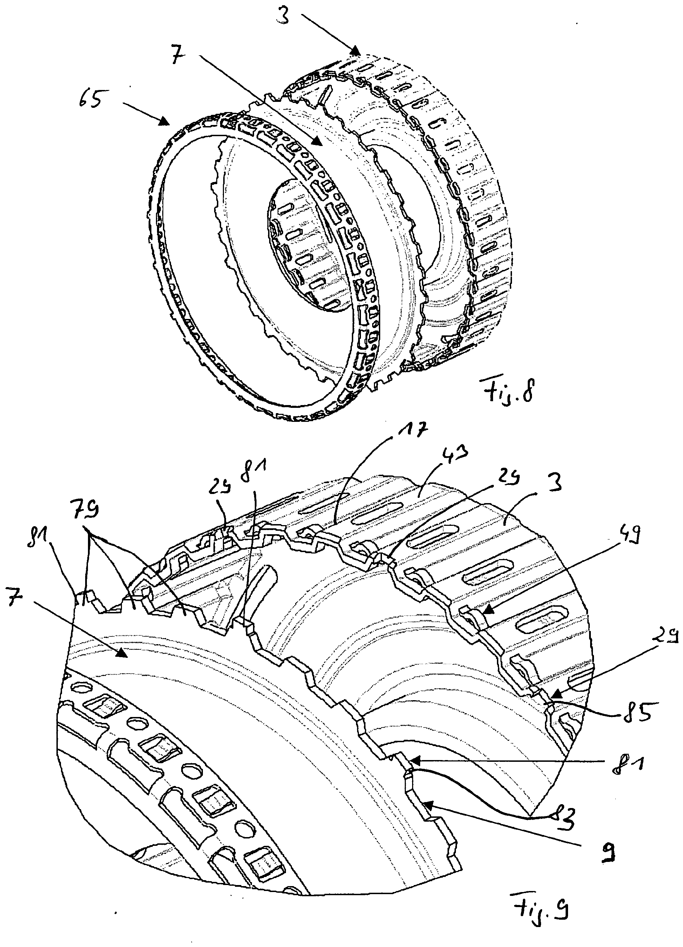

Wie in den perspektivischen Darstellungen der Figuren 8 bis 13 zu erkennen ist, ist die Mitnehmerscheibe 7 mit einer regelmäßigen Außenverzahnung 9 versehen. Jeder Axialnut 43 des Außenlamellenträgers 3 ist ein Zahn 79 am Außenumfang der Mitnehmerscheibe 7 zugeordnet. Die Zähne 79 sind formkomplementär zu den Axialnuten 43 des Außenlamellenträgers ausgebildet. Die Zahndicke der Zähne 79 in Umfangsrichtung ist derart ausgebildet, dass zwischen Mitnehmerscheibe 7 und Außenlamellenträger 3 annähernd Spielfreiheit herrscht. Um die Mitnehmerscheibe 7 in Richtung Lamellenpaket axial festzusetzen, sind mehrere Axialanschläge 29 zwischen Mitnehmerscheibe 7 und Außenlamellenträger 3 erforderlich. Mindestens zwei, vorzugsweise mehrere Zähne 81 der Außenverzahnung 9 der Mitnehmerscheibe sind in radialer Richtung verlängert, wobei die radialen Verlängerungen 83 in endseitig offenen Aussparungen 85 der Axialnuten 43 eingreifen und axial am Lamellenträger 3 anliegen. Da die Aussparungen 85 im Boden der Axialnut 43 unabhängig von der Position der in den Axialstegen befindlichen Sicherungsringnut 15 hergestellt werden können, kann die Mitnehmerscheibe 7 bis annähernd an die Sicherungsringnut 15 positioniert werden. Dadurch ergibt sich ein zusätzlicher Bauraumvorteil. Der in Figur 7a eingezeichnete, geringe Abstand A zwischen Anschlag 29 und der Sicherungsringnut 15 des Sprengrings 13 ist aus Toleranzgründen bzw. aufgrund der Elastizität der Bauteile erforderlich, um so ein Aufliegen der Mitnehmerscheibe 7 auf dem Springring 13 zu vermeiden.

Bei dem in den Figuren 5 bis 13 dargestellten Ausführungsbeispiel greifen die Laschen 73 hinter die Stege 49, die beim Stanzen der Sicherungsringnut 15 entstehen. Die Laschen springen beim Aufschieben des axialen Ringabschnitts 67 hinter diesen Steg.

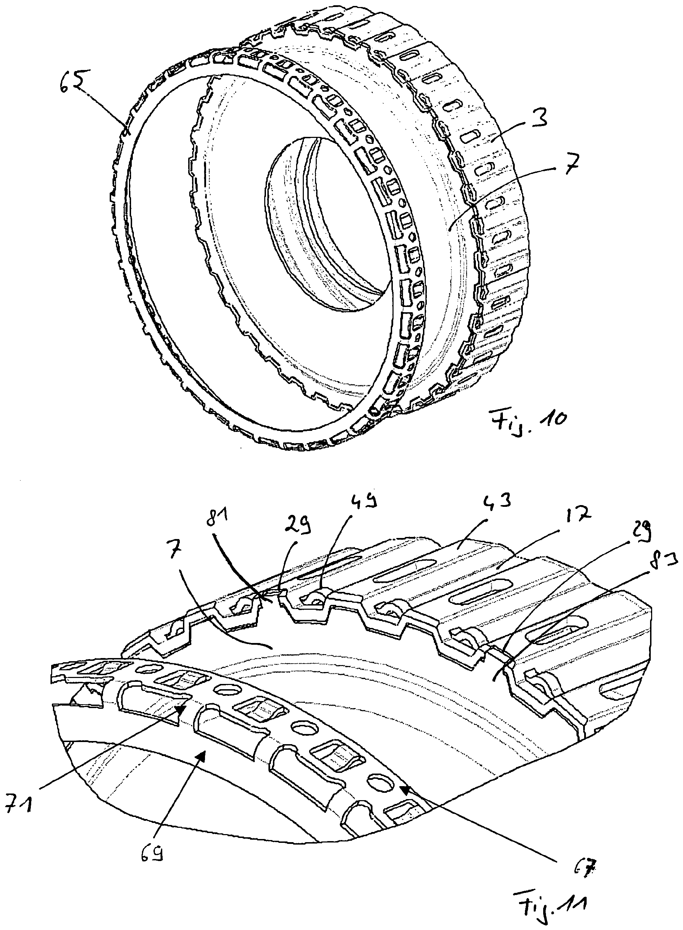

Figur 10 zeigt den Außenlamellenträger 3 mit bereits an den Anschlägen 29 anliegender Mitnehmerscheibe 7. Die Mitnehmerscheibe 7 liegt mittels der verlängerten Zähne 81 an den Anschlägen 29 an. Dadurch, dass mit jedem Zahn 79 ein Teildrehmoment auf den Lamellenträger 3 übertragbar ist, kann ein wesentlich höheres Drehmoment als bei den Kupplungen gemäß Stand der Technik, übertragen werden.

Ein weiterer großer Vorteil ist die erleichterte Montierbarkeit, da aufgrund der erfindungsgemäßen Ausgestaltung des Kraftübertragungsaggregates auf eine Schwalbenschwanzverzahnung verzichtet werden kann. Selbstverständlich ist es auch möglich, trotz der erfindungsgemäßen Ausgestaltungs des Kraftaggregates, die Zähne 79 der Außenverzahnung 9 der Mitnehmerscheibe 7 in Schwalbenschwanzform auszubilden. Bei dieser Variante kommt dem Ring 65 keine Haltefunktion gegen radiales Aufweiten des Außenlamellenträgers 3 bei Drehung zu. Da bei der erfindungsgemäßen Lösung auf einen Sprengring zur Fixierung der Mitnehmerscheibe 7 verzichtet wird, können theoretisch auch bei einer Schwalbenschwanzverzahnung sämtliche Zähne ein Drehmoment in Umfangsrichtung übertragen, wodurch sich auch bei dieser Ausgestaltungsvariante das maximal mit der Kraftübertragungseinrichtung übertragbare Drehmoment erhöht.

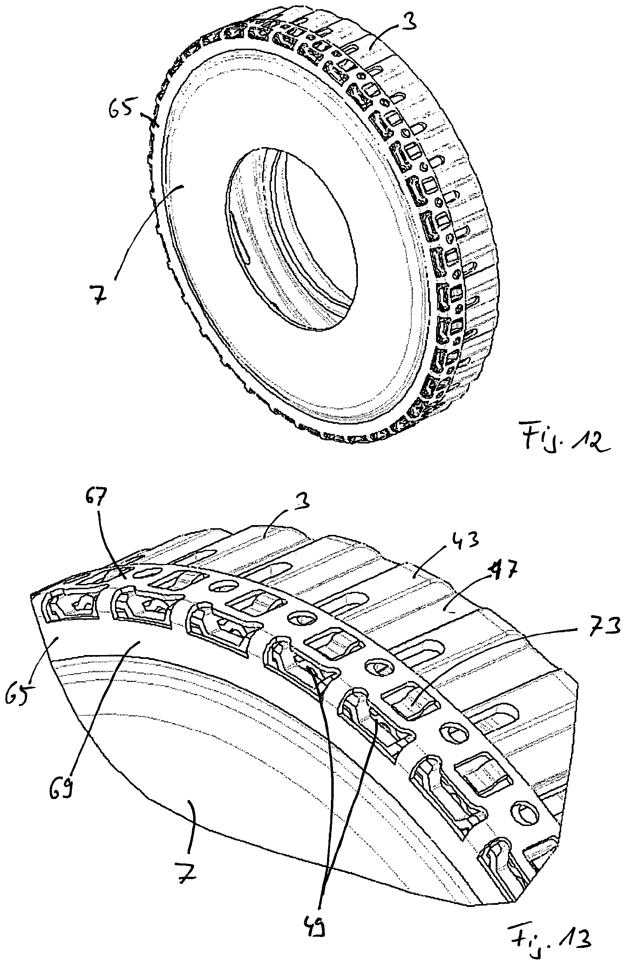

In den Figuren 12 und 13 ist der Ring 65 bereits mit dem axialen Ringabschnitt 67 von außen an dem Außenlamellenträger 3 fixiert. Die Laschen 73 hintergreifen die Stege 49. Der als Tellerfeder ausgebildete, radiale Ringabschnitt 69 drückt die Mitnehmerscheibe 7 in axialer Richtung gegen die Anschläge 29.

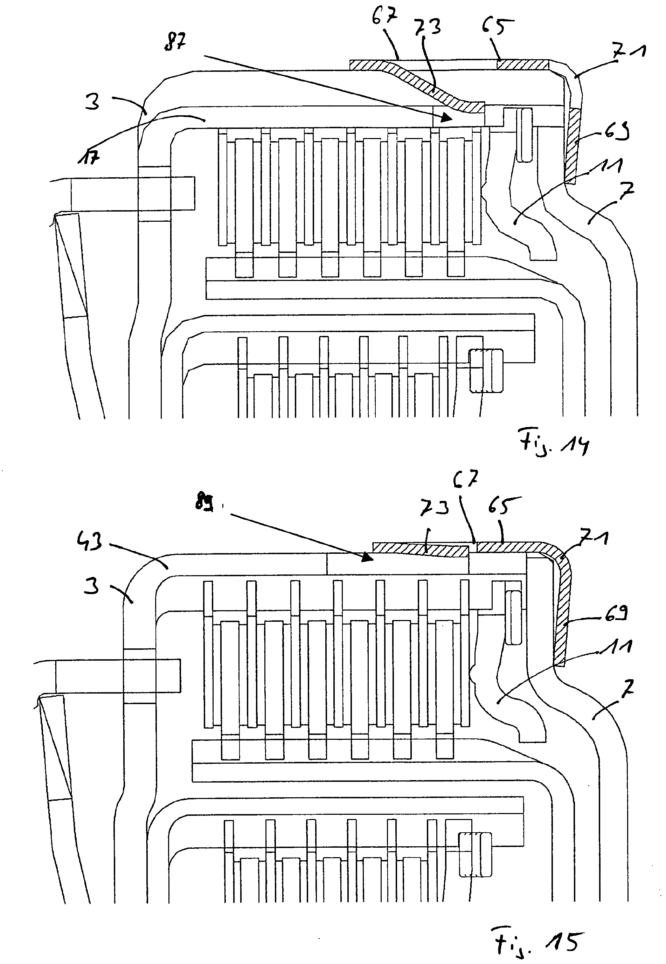

Die Laschen 73 müssen nicht zwangsweise die Stege 49 hintergreifen. In Figur 14 ist dargestellt, dass die Laschen 73 auch derart ausgebildet werden können, dass sie in die Ölfenster 87 des Außenlamellenträgers eingreifen können. In Figur 14 ist das Ölfenster in einem Axialsteg 17 des Außenlamellenträgers 3 vorgesehen.

Wie in Figur 15 dargestellt, können die Laschen 73 auch in Ölfenster 89 in Axialnuten 43 des Außenlamellenträgers 3 eingreifen.

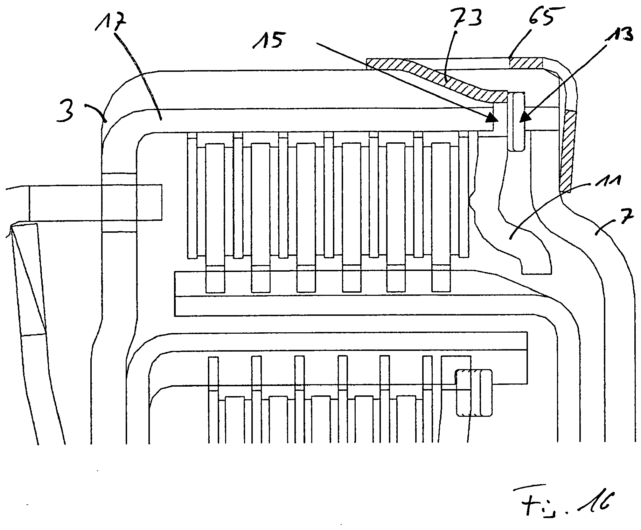

In Figur 16 ist eine weitere Variante dargestellt. Dort sind die Laschen 73 hinter den Sprengring 13 eingehakt. Hierzu ist es erforderlich, die Sicherungsringnut 15 im Axialsteg 17 des Außenlamellenträgers 3 zu durchbrechen.

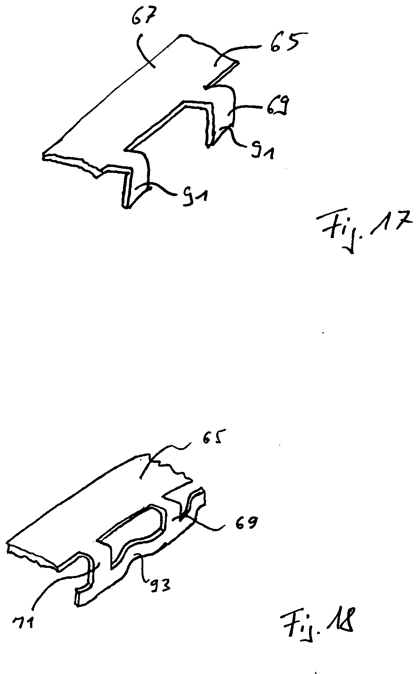

In Figur 17 ist eine weitere, vereinfachte Variante des abgewinkelter Rings 65 dargestellt. Auch dieser Ring 65 weist einen axialen, koaxial zum Lamellenträger angeordneten Ringabschnitt 67 und einen dazu um etwa 90 Grad nach innen abgewinkelten, radialen Ringabschnitt 69 auf. Der radiale Ringabschnitt 67 ist jedoch nicht als Tellerfeder ausgebildet, sondern besteht lediglich aus in radialer Richtung weisenden, über den Umfang verteilten, federnden Laschen 91, die nicht in Umfangsrichtung miteinander verbunden sind. Diese Variante hat den Vorteil einer erhöhten Elastizität bei gleicher Materialdicke.

In Figur 18 ist eine weitere Ausgestaltungsvariante des Rings 65 gezeigt. Dort ist der umfaufende Ringabschnitt (93) des radialen Ringabschnitts 69 nicht als Tellerfeder sondern als Biegefeder ausgebildet. Der Ringabschnitt 69 ist in Umfangsrichtung mit einer axialen Welligkeit versehen und wirkt so federnd auf die Mitnehmerscheibe 7. Diese Variante hat ebenfalls den Vorteil einer erhöhten Elastizität.

Aus Übersichtlichkeitsgründen sind die Laschen 73 zur Festlegung des Rings 65 an dem Lamellenträger 3 nicht dargestellt.

### Bezugszeichenliste

- 1: Kraftübertragungsaggregat
- 3: Außenlamellenträger
- 5: Außenlamellen
- 6: Zylinderabschnitt des Lamellenträgers
- 7: Mitnehmerscheibe
- 9: Außenverzahnung
- 11: Rückenplatte
- 13: Sprengring
- 15: Sicherungsringnut
- 17: Axialstege
- 19: Sicherungselement
- 21: Außenverzahnung des Sicherungselementes
- 23: Haltefinger
- 25: Öffnungen
- 27: Freie, abgewinkelte Enden
- 29: Anschläge
- 31: Haken
- 33: Öffnung
- 35: Ausnehmung
- 37: Bereich des axialen Kraftangriffs
- 39: Sprengring
- 41: Außenverzahnung
- 43: Axialnuten
- 45: Richtungspfeil
- 47: Richtungspfeil
- 49: Stege
- 51: Wand
- 53: Vorspannring
- 54: Richtungspfeil
- 55: Fenster
- 57: Schlitze
- 59: Rampen
- 61: Zungen
- 63: Fenster
- 64: Schnittlinie
- 65: Ring
- 67: axialer Ringabschnitt
- 69: radialer Ringabschnitt
- 71: Verbindungsstege
- 73: Laschen
- 75: freie Laschenenden
- 77: Schnittlinien
- 79: Zähne
- 81: radial verlängerte Zähne
- 83: radiale Verlängerung
- 85: Aussparung
- 87: Ölfenster
- 89: Ölfenster
- 91: Laschen
- 93: Ringabschnitt

## Patentansprüche

1. Kraftübertragungsaggregat (1), insbesondere Lamellenkupplung oder Reibbremse, bei dem ein Lamellenträger (3) mit mindestens einer drehfest an diesem fixierten Lamelle (5) mit Außenverzahnung an einem Zylinderabschnitt (6) lamellenseitig über den Umfang verteilt wechselweise Axialnuten (17) und Axialstege (43) aufweist und einseitig über eine in axialer Richtung von den Lamellen (5) beabstandete Mitnehmerscheibe (7) mit einer Nabe in Verbindung steht, wobei zur Übertragung eines Drehmoments eine drehfeste Verbindung zwischen Mitnehmerscheibe (7) und dem Lamellenträger (3) über eine Steckverzahnung besteht und wobei zusätzlich Mittel zur axialen Fixierung der Mitnehmerscheibe (7) an dem Lamellenträger (3) vorgesehen sind,
**dadurch gekennzeichnet, dass** die Mittel (19, 53, 65) zur axialen Fixierung derart ausgebildet sind, dass von der Mitnehmerscheibe (7) auf den Lamellenträger (3) wirkende Axialkräfte ausschließlich an dem Bereich (37) des Lamellenträgers (3) angreifen, der sich axial von der Mitnehmerscheibe (7) in Richtung Lamellen (5) erstreckt, wobei die Mittel (19, 53, 65) zur axialen Fixierung die Mitnehmerscheibe (7) auf der den Lamellen (5) abgewandten Seite hintergreifen.

2. Kraftübertragungsaggregat nach Anspruch 1,
**dadurch gekennzeichnet, dass** die sich die Mitnehmerscheibe (7) mit der den Lamellen (5) zugewandten Seite axial, vorzugsweise mit mindestens einem Teil der Zähne der Außenverzahnung (9), am Lamellenträger (3) abstützt.

3. Kraftübertragungsaggregat nach einem der vorherigen Ansprüche,
**dadurch gekennzeichnet, dass** die Mittel (19, 53, 65) zur axialen Fixierung derart ausgebildet sind, dass die Mitnehmerscheibe (7) in axialer Richtung gegen den Lamellenträger (3) vorgespannt ist.

4. Kraftübertragungsaggregat nach einem der vorherigen Ansprüche,
**dadurch gekennzeichnet, dass** die Mittel (19, 53, 65) zur axialen Fixierung von der Innenseite des Lamellenträgers (3) her an diesem festgelegt sind.

5. Kraftübertragungsaggregat nach einem der vorherigen Ansprüche,
**dadurch gekennzeichnet, dass** die Mittel (19) zur axialen Fixierung als, vorzugsweise geschlossenes, ringförmiges Sicherungselement (19) ausgebildet sind, welches an dem Lamellenträger (3) axial festgelegt ist, wobei das Sicherungselement (19) über dem Umfang verteilte, axial in Richtung Mitnehmerscheibe (7) weisende Haltefinger (23) aufweist, die durch axiale Öffnungen (25) in der Mitnehmerscheibe (7) geführt sind.

6. Kraftübertragungsaggregat nach Anspruch 5,
**dadurch gekennzeichnet, dass** die freien Enden (27) der Haltefinger (23) abgewinkelt sind und die Mitnehmerscheibe (7) mit den abgewinkelten Enden (27) hintergreifen.

7. Kraftübertragungsaggregat nach einem der Ansprüche 5 oder 6,
**dadurch gekennzeichnet, dass** zwischen Lamellen (5) und Mitnehmerscheibe (7) eine Rückenplatte (11) zur axialen Festlegung der Lamellen (5) vorgesehen ist, die mittels eines Sprengrings (13) am Lamellenträger (3) festgelegt ist, wobei das Sicherungselement (19) zwischen Rückenplatte (11) und Sprengring (13) oder zwischen Sprengring (13) und Nutwand (51) eingespannt ist.

8. Kraftübertragungsaggregat nach einem der Ansprüche 5 bis 7,
**dadurch gekennzeichnet, dass** die abgewinkelten Enden (27) der Haltefinger (23) in radialen Ausnehmungen (35) aufgenommen sind.

9. Kraftübertragungsaggregat nach einem der Ansprüche 5 oder 8,
**dadurch gekennzeichnet, dass** die Mitnehmerscheibe (7) mittels der Haltefinger (23) axial gegen den Lamellenträger (5) vorgespannt ist, wobei das Sicherungselement (19) als Tellerfeder zur federnden Speicherung der axialen Vorspannung ausgebildet ist und/oder die Haltefinger federnd, insbesondere als Biegefeder, ausgebildet sind.

10. Kraftübertragungsaggregat nach einem der Ansprüche 5 bis 9,
**dadurch gekennzeichnet, dass** das Sicherungselement (19) eine Außenverzahnung (21) aufweist, mit der es in Umfangsrichtung am Lamellenträger (3) gehalten ist.

11. Kraftübertragungsaggregat nach Anspruch 10,
**dadurch gekennzeichnet, dass** die Außenverzahnung (21) des Sicherungselements (19) der Außenverzahnung der Lamellen (5) entspricht.

12. Kraftübertragungsaggregat nach einem der Ansprüche 5 bis 11,
**dadurch gekennzeichnet, dass** am Sicherungselement (19) mindestens ein Mittel (31) zur Positionierung in Umfangsrichtung vorgesehen ist, wobei die Mittel vorzugsweise als Haken (31) ausgebildet sind, der in eine axiale Ausnehmung (33) in der Rückenplatte (11) eingreift.

13. Kraftübertragungsaggregat nach einem der Ansprüche 5 bis 12,
**dadurch gekennzeichnet, dass** das Sicherungselement (19) unlösbar mit der Rückenplatte (11) verbunden ist, vorzugsweise einstückig mit der Rückenplatte (11) ausgebildet ist.

14. Kraftübertragungsaggregat nach einem der Ansprüche 5 bis 13,
**dadurch gekennzeichnet, dass** das sämtliche Zähne (79) der Außenverzahnung (9) der Mitnehmerscheibe derart ausgebildet sind, dass sie ein Drehmoment auf den Lamellenträger übertragen.

15. Kraftübertragungsaggregat nach Anspruch 5,
**dadurch gekennzeichnet, dass** das ringförmige Sicherungselement (19) eine Außenverzahnung (41) aufweist mit der es in eine, vorzugsweise in den Axialstegen (17) des Lamellenträgers (3) vorgesehene, Umfangsnut (15) im Lamellenträger (3) einbringbar ist, insbesondere durch axiales Einführen der Außenverzahnung (41) des Sicherungselements (19) in die Axialnuten (43) des Lamellenträgers (3) und anschließendes Verdrehen des Sicherungselements (19) in Umfangrichtung (47).

16. Kraftübertragungsaggregat nach Anspruch 15,
**dadurch gekennzeichnet, dass** zwischen den abgewinkelten Enden (27) der Haltefinger (23) und die Mitnehmerscheibe (7) axial ein, vorzugsweise geschlossener Vorspannring (53), zur axialen Vorspannung der Mitnehmerscheibe (7) vorgesehen ist, der sich zum einen an der Mitnehmerscheibe (7) und zum anderen an den abgewinkelten Enden (27) der Haltefinger (23) abstützt.

17. Kraftübertragungsaggregat nach Anspruch 16,
**dadurch gekennzeichnet, dass** der Vorspannring (53) über den Umfang verteilte, in Umfangsrichtung verlaufende Schlitze (57), zur Durchführung der Haltefinger (23) aufweist, wobei entlang zumindest einer Schlitzlängsseite eines, vorzugsweise jedes, Schlitzes (53) eine sich in Umfangsrichtung axial verbreiternde Rampe (59) vorgesehen ist, wobei die Vorspannung der Mitnehmerscheibe (7) gegen den Lamellenträger (3) durch Verdrehen des Vorspannrings (53) in Umfangsrichtung (54) erzeugbar ist.

18. Kraftübertragungsaggregat nach einem der Ansprüche 15 bis 17,
**dadurch gekennzeichnet, dass** die abgewinkelten Enden (27) der Haltefinger (23) in Umfangrichtung angewinkelt sind.

19. Kraftübertragungsaggregat nach einem der Ansprüche 15 bis 18,
**dadurch gekennzeichnet, dass** der Vorspannring (53) an der Mitnehmerscheibe (7) drehfest, vorzugsweise formschlüssig, fixierbar ist.

20. Kraftübertragungsaggregat nach Anspruch 19,
**dadurch gekennzeichnet, dass** zur Fixierung des Vorspannrings (53) an der Mitnehmerscheibe (7) an dem Vorspannring (53) mindestens eine Zunge vorgesehen ist, die in ein entsprechendes Fenster (63) in der Mitnehmerscheibe (7) einbiegbar ist.

21. Kraftübertragungsaggregat nach Anspruch 20,
**dadurch gekennzeichnet, dass** über den Umfang des Vorspannrings (53) mehrere Zungen (61) vorgesehen sind, und wobei in der Mitnehmerscheibe (7) eine ähnlich große Anzahl von Fenstern (55) vorgesehen ist, wobei die Zungen (61) und die Fenster (63) in unterschiedlichen Umfangspositionen angeordnet sind, wobei jeweils nach Verdrehen der Vorspannscheibe (53) um einen kleinem Drehwinkel mindestens eine Zunge (61) mit einem Fenster (63) fluchtet, und zwar derart, dass die Zunge (61) in das Fenster (63) einbiegbar ist.

22. Kraftübertragungsaggregat nach einem der Ansprüche 1 bis 3,
**dadurch gekennzeichnet, dass** die Mittel (65) zur axialen Fixierung von der Außenseite des Lamellenträgers (3) her an diesem festgelegt sind.

23. Kraftübertragungsaggregat nach Anspruch 22,
**dadurch gekennzeichnet, dass** die Mittel (65) als, vorzugsweise geschlossener, abgewinkelter Ring (65) ausgebildet sind, der einen axialen, koaxial zum Lamellenträger (3) angeordneten, Ringabschnitt (67) und einen radialen Ringabschnitt (69) aufweist, wobei der Ring (65) mit dem axialen Ringabschnitt (67) am Lamellenträger (3) festlegbar ist und mit dem radialen Ringabschnitt (69) an der Mitnehmerscheibe (7) anliegt.

24. Kraftübertragungsaggregat nach Anspruch 23,
**dadurch gekennzeichnet, dass** der axiale Ringabschnitt (67) über den Umfang verteilte, in axialer Richtung verlaufende und nach innen abgewinkelte, federnde Laschen (73) zur direkten oder indirekten Festlegung an dem Lamellenträger (3) aufweist, wobei die freien Enden der Laschen (73) in Richtung radialem Ringabschnitt (69) weisen.

25. Kraftübertragungsaggregat nach Anspruch 24,
**dadurch gekennzeichnet, dass** die freien Enden der Laschen (73) hinter radialen Vorsprüngen im Lamellenträger, insbesondere hinter Axialstegen (49) einer in Umfangsrichtung verlaufenden Sicherungsringnut (15) für einen Sperrring (13), oder in radialen Vertiefungen im Lamellenträger oder in radialen Öffnungen im Lamellenträger, insbesondere in Ölfenstern (87, 89) des Lamellenträgers (3), einrasten.

26. Kraftübertragungsaggregat nach einem der Ansprüche 24 oder 25,
**dadurch gekennzeichnet, dass** der radiale Ringabschnitt (69) als Tellerfeder ausgebildet ist, die bei eingerasteten Laschen (73) vorgespannt ist und die Mitnehmerscheibe (7) axial gegen Anschläge (29) des Lamellenträgers (3) drückt.

27. Kraftübertragungsaggregat nach einem der Ansprüche 24 bis 26,
**dadurch gekennzeichnet, dass** der axiale Ringabschnitt (67) und der radiale Ringabschnitt (69) über mehrere, in Umfangsrichtung beabstandete Stege (71) miteinander verbunden sind.

28. Kraftübertragungsaggregat nach einem der Ansprüche 23 bis 25,
**dadurch gekennzeichnet, dass** der radiale Ringabschnitt (69) aus, mit ihrem freien Enden in radialer Richtung weisenden, über den Umfang verteilten, federnden Laschen (91) gebildet ist.

29. Kraftübertragungsaggregat nach einem der Ansprüche 23 bis 26,
**dadurch gekennzeichnet, dass** der radiale Ringabschnitt (69) einen in Umfangsrichtung verlaufenden Ringabschnitt (93) aufweist, der in Umfangsrichtung mit einer axialen Welligkeit versehen ist, wobei vorzugsweise der Ringabschnitt (93) mit dem axialen Ringabschnitt über mehrere, in Umfangsrichtung beabstandete Stege (71) verbunden ist.

30. Kraftübertragungsaggregat nach einem der Ansprüche 24 bis 29,
**dadurch gekennzeichnet, dass** die Anzahl der Zähne (79) der Außenverzahnung (9) der Mitnehmerscheibe (7) der Anzahl der Axialnuten (43) im Lamellenträger (3) entspricht, wobei die Zähne (79) in den Axialnuten (43) aufgenommen sind.

31. Kraftübertragungsaggregat nach einem der Ansprüche 24 bis 30,
**dadurch gekennzeichnet, dass** die Kontur der Zähne (79), insbesondere die Breite der Zähne (79) in Umfangsrichtung, derart ausgebildet ist, dass zwischen der Außenverzahnung (9) der Mitnehmerscheibe (7) und den Seitenwänden der Axialnuten (43) des Lamellenträgers in Umfangsrichtung annähernd Spielfreiheit besteht.

32. Kraftübertragungsaggregat nach einem der Ansprüche 24 bis 31,
**dadurch gekennzeichnet, dass** mehrere Zähne (81) der Außenverzahnung der Mitnehmerscheibe in radialer Richtung verlängert sind, wobei die radiale Verlängerung (83) in endseitig offenen Aussparungen (85) der Axialnuten (43) eingreifen und axial am Lamellenträger (3) anliegen.

33. Kraftübertragungsaggregat nach Anspruch 32,
**dadurch gekennzeichnet, dass** die Aussparungen (85) in axialer Richtung bis annähernd an einen im Lamellenträger (3) umlaufenden Sprengring (13) reichen.

## Claims

1. Power transmission assembly (1), in particular multiplate clutch or friction brake, in which a plate carrier (3), with at least one plate (5) which is fixed rotationally conjointly to said plate carrier and which has an external toothing, has, on a cylinder section (6), axial grooves (17) and axial webs (43) distributed in an alternating manner over the circumference at the plate side and, on one side, is connected by means of a driver disc (7), which is spaced apart in an axial direction from the plates (5), to a hub, wherein, for the transmission of a torque, a rotationally conjoint connection exists between driver disc (7) and the plate carrier (3) by means of a spline toothing, and wherein, in addition, means are provided for the axial fixing of the driver disc (7) to the plate carrier (3),
**characterized in that** the means (19, 53, 65) for the axial fixing are designed such that axial forces exerted by the driver disc (7) on the plate carrier (3) act exclusively on that region (37) of the plate carrier (3) which extends axially from the driver disc (7) in the direction of plates (5), wherein the means (19, 53, 65) for the axial fixing engage behind the driver disc (7) on the side averted from the plates (5).

2. Power transmission assembly according to Claim 1,
**characterized in that** the driver disc (7) is, with the side facing towards the plates (5), supported axially, preferably with at least some of the teeth of the external toothing (9), on the plate carrier (3).

3. Power transmission assembly according to one of the preceding claims,
**characterized in that** the means (19, 53, 65) for the axial fixing are designed such that the driver disc (7) is preloaded in an axial direction against the plate carrier (3).

4. Power transmission assembly according to one of the preceding claims,
**characterized in that** the means (19, 53, 65) for the axial fixing are fixed to the plate carrier (3) from the inner side of the latter.

5. Power transmission assembly according to one of the preceding claims,
**characterized in that** the means (19) for the axial fixing are designed as a, preferably closed, ring-shaped securing element (19) which is fixed axially to the plate carrier (3), wherein the securing element (19) has holding fingers (23) which are distributed over the circumference and which point axially in the direction of the driver disc (7) and which are led through axial openings (25) in the driver disc (7).

6. Power transmission assembly according to Claim 5,
**characterized in that** the free ends (27) of the holding fingers (23) are angled and engage with the angled ends (27) behind the driver disc (7).

7. Power transmission assembly according to either of Claims 5 and 6,
**characterized in that**, between plates (5) and driver disc (7), there is provided a backplate (11) for the axial fixing of the plates (5), which backplate is fixed by means of a circlip (13) to the plate carrier (3), wherein the securing element (19) is clamped between backplate (11) and circlip (13) or between circlip (13) and groove wall (51).

8. Power transmission assembly according to one of Claims 5 to 7,
**characterized in that** the angled ends (27) of the holding fingers (23) are received in radial recesses (35).

9. Power transmission assembly according to either of Claims 5 and 8,
**characterized in that** the driver disc (7) is preloaded by means of the holding fingers (23) axially against the plate carrier (5), wherein the securing element (19) is designed as a disc spring for resiliently storing the axial preload, and/or the holding fingers are of resilient design, in particular are designed as flexible springs.

10. Power transmission assembly according to one of Claims 5 to 9,
**characterized in that** the securing element (19) has an external toothing (21) by means of which it is held in a circumferential direction on the plate carrier (3).

11. Power transmission assembly according to Claim 10,
**characterized in that** the external toothing (21) of the securing element (19) corresponds to the external toothing of the plates (5).

12. Power transmission assembly according to one of Claims 5 to 11,
**characterized in that** at least one means (31) for positioning in a circumferential direction is provided on the securing element (19), wherein the means are preferably designed as a hook (31) which engages into an axial recess (33) in the backplate (11).

13. Power transmission assembly according to one of Claims 5 to 12,
**characterized in that** the securing element (19) is non-detachably connected to the backplate (11), preferably is formed in one piece with the backplate (11).

14. Power transmission assembly according to one of Claims 5 to 13,
**characterized in that** all of the teeth (79) of the external toothing (9) of the driver disc are designed such that they transmit a torque to the plate carrier.

15. Power transmission assembly according to Claim 5,
**characterized in that** the ring-shaped securing element (19) has an external toothing (41) by means of which said securing element can be introduced into a circumferential groove (15) in the plate carrier (3) provided preferably in the axial webs (17) of the plate carrier (3), in particular by axial insertion of the external toothing (41) of the securing element (19) into the axial grooves (43) of the plate carrier (3) and subsequent rotation of the securing element (19) in a circumferential direction (47).

16. Power transmission assembly according to Claim 15,
**characterized in that**, axially between the angled ends (27) of the holding fingers (23) and the driver disc (7), there is provided a preferably closed preload ring (53) for the axial preloading of the driver disc (7), which preload ring is supported at one side on the driver disc (7) and at the other side on the angled ends (27) of the holding fingers (23).

17. Power transmission assembly according to Claim 16,
**characterized in that** the preload ring (53) has slots (57), which are distributed over the circumference and which extend in a circumferential direction, for the leadthrough of the holding fingers (23), wherein, along at least one slot longitudinal side of a, preferably each, slot (53), there is provided a ramp (59) which widens axially in a circumferential direction, wherein the preload of the driver disc (7) against the plate carrier (3) can be generated by rotation of the preload ring (53) in a circumferential direction (54).

18. Power transmission assembly according to one of Claims 15 to 17,
**characterized in that** the angled ends (27) of the holding fingers (23) are angled in a circumferential direction.

19. Power transmission assembly according to one of Claims 15 to 18,
**characterized in that** the preload ring (53) is fixable rotationally conjointly, preferably in positively locking fashion, to the driver disc (7).

20. Power transmission assembly according to Claim 19,
**characterized in that**, for the fixing of the preload ring (53) to the driver disc (7), at least one tongue is provided on the preload ring (53), which at least one tongue can be bent into a corresponding window (63) in the driver disc (7).

21. Power transmission assembly according to Claim 20,
**characterized in that** multiple tongues (61) are provided over the circumference of the preload ring (53), and wherein a similar number of windows (55) is provided in the driver disc (7), wherein the tongues (61) and the windows (63) are arranged in different circumferential positions, wherein, in each case after rotation of the preload disc (53) through a small angle of rotation, at least one tongue (61) is aligned with a window (63), specifically such that the tongue (61) can be bent into the window (63).

22. Power transmission assembly according to one of Claims 1 to 3,
**characterized in that** the means (65) for the axial fixing are fixed to the plate carrier (3) from the outer side of the latter.

23. Power transmission assembly according to Claim 22,
**characterized in that** the means (65) are formed as a preferably closed, angled ring (65) which has an axial ring section (67), arranged coaxially with respect to the plate carrier (3), and a radial ring section (69), wherein the ring (65) is fixable by means of the axial ring section (67) to the plate carrier (3) and bears with the radial ring section (69) against the driver disc (7).

24. Power transmission assembly according to Claim 23,
**characterized in that** the axial ring section (67) has resilient lugs (73) which are distributed over the circumference, which extend in an axial direction and which are angled inwards and which serve for the direct or indirect fixing to the plate carrier (3), wherein the free ends of the lugs (73) point in the direction of the radial ring section (69) .

25. Power transmission assembly according to Claim 24,
**characterized in that** the free ends of the lugs (73) engage behind radial projections in the plate carrier, in particular behind axial webs (49) of a securing ring groove (15), which extends in a circumferential direction, for a circlip (13), or into radial depressions in the plate carrier or into radial openings in the plate carrier, in particular into oil windows (87, 89) of the plate carrier (3).

26. Power transmission assembly according to one of Claims 24 and 25,
**characterized in that** the radial ring section (69) is formed as a disc spring which, when the lugs (73) have been engaged, is preloaded and presses the driver disc (7) axially against stops (29) of the plate carrier (3).

27. Power transmission assembly according to one of Claims 24 to 26,
**characterized in that** the axial ring section (67) and the radial ring section (69) are connected to one another by means of multiple webs (71) which are spaced apart in a circumferential direction.

28. Power transmission assembly according to one of Claims 23 to 25,
**characterized in that** the radial ring section (69) is formed from resilient lugs (91) which point with their free ends in a radial direction and which are distributed over the circumference.

29. Power transmission assembly according to one of Claims 23 to 26,
**characterized in that** the radial ring section (69) has a ring section (93) which runs in a circumferential direction and which, in a circumferential direction, is provided with an axial undulation, wherein preferably, the ring section (93) is connected to the axial ring section by means of multiple webs (71) which are spaced apart in a circumferential direction.

30. Power transmission assembly according to one of Claims 24 to 29,
**characterized in that** the number of teeth (79) of the external toothing (9) of the driver disc (7) corresponds to the number of axial grooves (43) in the plate carrier (3), wherein the teeth (79) are received in the axial grooves (43).

31. Power transmission assembly according to one of Claims 24 to 30,
**characterized in that** the contour of the teeth (79), in particular the width of the teeth (79) in a circumferential direction, is designed such that there is virtually freedom from play in a circumferential direction between the external toothing (9) of the driver disc (7) and the side walls of the axial grooves (43) of the plate carrier.

32. Power transmission assembly according to one of Claims 24 to 31,
**characterized in that** multiple teeth (81) of the external toothing of the driver disc are elongated in a radial direction, wherein the radial elongations (83) engage into cutouts (85), which are open at the end side, of the axial grooves (43) and bear axially against the plate carrier (3).

33. Power transmission assembly according to Claim 32,
**characterized in that** the cutouts (85) extend in an axial direction approximately as far as a circlip (13) which extends in encircling fashion in the plate carrier (3).

## Revendications

1. Ensemble de transmission de force (1), en particulier embrayage multidisque ou frein à friction, dans lequel un porte-disques (3) avec au moins un disque (5) doté d'une denture extérieure calé sur celui-ci présente sur une partie cylindrique (6) en alternance des rainures axiales (17) et des nervures axiales (43) réparties sur la périphérie du côté des disques et est en liaison sur un côté avec un disque d'entraînement (7) avec un moyeu espacé en direction axiale des disques (5), dans lequel il existe pour la transmission d'un couple un assemblage sans rotation entre le disque d'entraînement (7) et le porte-disques (3) au moyen d'une denture d'accouplement et dans lequel il est prévu en outre des moyens pour la fixation axiale du disque d'entraînement (7) au porte-disques (3), **caractérisé en ce que** les moyens (19, 53, 65) pour la fixation axiale sont configurés de telle manière que des forces axiales agissant du disque d'entraînement (7) sur le porte-disques (3) agissent exclusivement sur la région (37) du porte-disques (3), qui s'étend axialement du disque d'entraînement (7) en direction des disques (5), dans lequel les moyens (19, 53, 65) pour la fixation axiale sont accrochés au disque d'entraînement (7) sur le côté situé à l'opposé des disques (5).

2. Ensemble de transmission de force selon la revendication 1, **caractérisé en ce que** le disque d'entraînement (7) prend appui axialement sur le porte-disques (3) avec le côté tourné vers les disques (5), de préférence avec au moins une partie des dents de la denture extérieure (9).

3. Ensemble de transmission de force selon l'une quelconque des revendications précédentes, **caractérisé en ce que** les moyens (19, 53, 65) pour la fixation axiale sont configurés de telle manière que le disque d'entraînement (7) soit précontraint en direction axiale contre le porte-disques (3).

4. Ensemble de transmission de force selon l'une quelconque des revendications précédentes, **caractérisé en ce que** les moyens (19, 53, 65) pour la fixation axiale sont montés sur le porte-disques (3) à partir du côté intérieur de celui-ci.

5. Ensemble de transmission de force selon l'une quelconque des revendications précédentes, **caractérisé en ce que** les moyens (19) pour la fixation axiale sont réalisés sous la forme d'un élément de blocage annulaire (19), de préférence fermé, qui est calé axialement sur le porte-disques (3), dans lequel l'élément de blocage (19) présente des doigts de maintien (23) répartis sur la périphérie et orientés axialement en direction du disque d'entraînement (7), qui sont menés à travers des ouvertures axiales (25) dans le disque d'entraînement (7).

6. Ensemble de transmission de force selon la revendication 5, **caractérisé en ce que** les extrémités libres (27) des doigts de maintien (23) sont coudées et s'accrochent derrière le disque d'entraînement (7) avec les extrémités coudées (27).

7. Ensemble de transmission de force selon une des revendications 5 ou 6, **caractérisé en ce qu'**il est prévu entre les disques (5) et le disque d'entraînement (7) une plaque dorsale (11) pour le blocage axial des disques (5), qui est calée au moyen d'un circlip (13) sur le porte-disques (3), dans lequel l'élément de blocage (19) est serré entre la plaque dorsale (11) et le circlip (13) ou entre le circlip (13) et une paroi de rainure (51).

8. Ensemble de transmission de force selon l'une quelconque des revendications 5 à 7, **caractérisé en ce que** les extrémités coudées (27) des doigts de maintien (23) sont logées dans des évidements radiaux (35).

9. Ensemble de transmission de force selon une des revendications 5 ou 8, **caractérisé en ce que** le disque d'entraînement (7) est précontraint au moyen des doigts de maintien (23) axialement contre le porte-disques (5), dans lequel l'élément de blocage (19) est réalisé sous la forme d'une rondelle élastique pour la conservation élastique de la précontrainte axiale et/ou les doigts de maintien sont de forme élastique, en particulier sont des ressorts de flexion.

10. Ensemble de transmission de force selon l'une quelconque des revendications 5 à 9, **caractérisé en ce que** l'élément de blocage (19) présente une denture extérieure (21), avec laquelle il est maintenu en direction périphérique sur le porte-disques (3).

11. Ensemble de transmission de force selon la revendication 10, **caractérisé en ce que** la denture extérieure (21) de l'élément de blocage (19) correspond à la denture extérieure des disques (5).

12. Ensemble de transmission de force selon l'une quelconque des revendications 5 à 11, **caractérisé en ce qu'**il est prévu sur l'élément de blocage (19) au moins un moyen (31) pour le positionnement en direction périphérique, dans lequel les moyens sont réalisés de préférence sous la forme d'un crochet (31), qui s'engage dans un évidement axial (33) dans la plaque dorsale (11).

13. Ensemble de transmission de force selon l'une quelconque des revendications 5 à 12, **caractérisé en ce que** l'élément de blocage (19) est assemblé de façon inséparable à la plaque dorsale (11), il est de préférence réalisé en une seule pièce avec la plaque dorsale (11).

14. Ensemble de transmission de force selon l'une quelconque des revendications 5 à 13, **caractérisé en ce que** toutes les dents (79) de la denture extérieure (9) du disque d'entraînement sont configurées de telle manière qu'elles transmettent un couple au porte-disque.

15. Ensemble de transmission de force selon la revendication 5, **caractérisé en ce que** l'élément de blocage annulaire (19) présente une denture extérieure (41), avec laquelle il peut être inséré dans une rainure périphérique (15) dans le porte-disques (3), de préférence prévue dans les nervures axiales (17) du porte-disques (3), en particulier par introduction axiale de la denture extérieure (41) de l'élément de blocage (19) dans les rainures axiales (43) du porte-disques (3) et ensuite rotation de l'élément de blocage (19) en direction périphérique (47).

16. Ensemble de transmission de force selon la revendication 15, **caractérisé en ce qu'**il est prévu axialement entre les extrémités coudées (27) des doigts de maintien (23) et le disque d'entraînement (7) un anneau de précontrainte (53) de préférence fermé, pour la précontrainte axiale du disque d'entraînement (7), qui prend appui d'une part sur le disque d'entraînement (7) et d'autre part sur les extrémités coudées (27) des doigts de maintien (23) .

17. Ensemble de transmission de force selon la revendication 16, **caractérisé en ce que** l'anneau de précontrainte (53) présente des fentes (57) s'étendant en direction périphérique réparties sur la périphérie, pour le passage des doigts de maintien (23), dans lequel il est prévu le long d'au moins un long côté de fente d'une, de préférence de chaque fente (53), une rampe (59) s'élargissant axialement en direction périphérique, dans lequel la précontrainte du disque d'entraînement (7) contre le porte-disques (3) peut être produite par la rotation de l'anneau de précontrainte (53) en direction périphérique (54).

18. Ensemble de transmission de force selon l'une quelconque des revendications 15 à 17, **caractérisé en ce que** les extrémités coudées (27) des doigts de maintien (23) sont coudées en direction périphérique.

19. Ensemble de transmission de force selon l'une quelconque des revendications 15 à 18, **caractérisé en ce que** l'anneau de précontrainte (53) peut être fixé sans rotation, de préférence par emboîtement, au disque d'entraînement (7).

20. Ensemble de transmission de force selon la revendication 19, **caractérisé en ce qu'**il est prévu sur l'anneau de précontrainte (53), pour la fixation de l'anneau de précontrainte (53) au disque d'entraînement (7), au moins une languette, qui peut être repliée dans une fenêtre correspondante (63) dans le disque d'entraînement (7) .

21. Ensemble de transmission de force selon la revendication 20, **caractérisé en ce qu'**il est prévu plusieurs languettes (61) sur la périphérie de l'anneau de précontrainte (53), et dans lequel il est prévu dans le disque d'entraînement (7) un nombre identique de fenêtres (55), dans lequel les languettes (61) et les fenêtres (63) sont disposées dans des positions périphériques différentes, dans lequel chaque fois après rotation du disque de précontrainte (53) d'un petit angle de rotation au moins une languette (61) est alignée avec une fenêtre (63), notamment de telle manière que la languette (61) puisse être repliée dans la fenêtre (63).

22. Ensemble de transmission de force selon l'une quelconque des revendications 1 à 3, **caractérisé en ce que** les moyens (65) pour la fixation axiale sont attachés au porte-disques (3) par le côté extérieur de celui-ci.

23. Ensemble de transmission de force selon la revendication 22, **caractérisé en ce que** les moyens (65) sont réalisés sous la forme d'un anneau coudé (65), de préférence fermé, qui présente un partie d'anneau axiale (67), disposée de façon coaxiale au porte-disques (3) et une partie d'anneau radiale (69), dans lequel l'anneau (65) peut être fixé avec la partie d'anneau axiale (67) au porte-disques (3) et s'applique avec la partie d'anneau radiale (69) sur le disque d'entraînement (7).

24. Ensemble de transmission de force selon la revendication 23, **caractérisé en ce que** la partie d'anneau axiale (67) présente des pattes élastiques (73) réparties sur la périphérie, s'étendant en direction axiale et coudées vers l'intérieur, pour la fixation directe ou indirecte sur le porte-disques (3), dans lequel les extrémités libres des pattes (73) sont orientées en direction de la partie d'anneau radiale (69).

25. Ensemble de transmission de force selon la revendication 24, **caractérisé en ce que** les extrémités libres des pattes (73) s'engagent derrière des saillies radiales dans le porte-disques, en particulier derrière des nervures axiales (49) d'une rainure d'anneau de blocage (15) s'étendant en direction périphérique pour un anneau de blocage (13), ou dans des creux radiaux dans le porte-disques ou dans des ouvertures radiales dans le porte-disques, en particulier dans des fenêtres de graissage (87, 89) du porte-disques (3).

26. Ensemble de transmission de force selon une des revendications 24 ou 25, **caractérisé en ce que** la partie d'anneau radiale (69) est réalisée sous la forme d'une rondelle élastique, qui est précontrainte lorsque les pattes (73) sont engagées et que le disque d'entraînement (7) pousse axialement contre des butées (29) du porte-disques (3).

27. Ensemble de transmission de force selon l'une quelconque des revendications 24 à 26, **caractérisé en ce que** la partie d'anneau axiale (67) et la partie d'anneau radiale (69) sont assemblées l'une à l'autre au moyen de plusieurs nervures (71) espacées l'une de l'autre en direction périphérique.

28. Ensemble de transmission de force selon l'une quelconque des revendications 23 à 25, **caractérisé en ce que** la partie d'anneau radiale (69) est formée de pattes élastiques (91) orientées en direction radiale et réparties sur la périphérie.

29. Ensemble de transmission de force selon l'une quelconque des revendications 23 à 26, **caractérisé en ce que** la partie d'anneau radiale (69) présente une partie d'anneau (93) s'étendant en direction périphérique, qui est dotée en direction périphérique d'une ondulation axiale, dans lequel la partie d'anneau (93) est de préférence reliée à la partie d'anneau axiale par plusieurs nervures (71) espacées en direction périphérique.

30. Ensemble de transmission de force selon l'une quelconque des revendications 24 à 29, **caractérisé en ce que** le nombre des dents (79) de la denture extérieure (9) du disque d'entraînement (7) correspond au nombre des rainures axiales (43) dans le porte-disques (3), dans lequel les dents (79) sont logées dans les rainures axiales (43).

31. Ensemble de transmission de force selon l'une quelconque des revendications 24 à 30, **caractérisé en ce que** le contour des dents (79), en particulier la largeur des dents (79), dans la direction périphérique est configuré de telle manière qu'il existe entre la denture extérieure (9) du disque d'entraînement (7) et les parois latérales des rainures axiales (43) du porte-disques environ une liberté de jeu en direction périphérique.

32. Ensemble de transmission de force selon l'une quelconque des revendications 24 à 31, **caractérisé en ce que** plusieurs dents (81) de la denture extérieure du disque d'entraînement sont prolongées en direction radiale, dans lequel le prolongement radial (83) s'engage dans des découpes ouvertes en extrémité (85) des rainures axiales (43) et s'appliquent axialement sur le porte-disques (3).

33. Ensemble de transmission de force selon la revendication 32, **caractérisé en ce que** les découpes (85) s'étendent en direction axiale environ jusqu'à un circlip périphérique (13) dans le porte-disques (3).
